# EUROPEAN PATENT SPECIFICATION

(11) **EP 4 116 346 B1**
(45) Date of publication and mention of the grant of the patent: **02.04.2025**
(21) Application number: 21764468.1
(22) Date of filing: 26.02.2021
(51) Int. Cl.: C08G 18/00, C08G 18/18, C08G 18/48, C08G 18/75, C08G 101/00

(54) **FOAMED POLYURETHANE RESIN COMPOSITION AND FOAMED POLYURETHANE ELASTOMER**
GESCHÄUMTE POLYURETHANHARZZUSAMMENSETZUNG UND GESCHÄUMTES POLYURETHANELASTOMER
COMPOSITION DE RÉSINE DE POLYURÉTHANE EXPANSÉ ET ÉLASTOMÈRE DE POLYURÉTHANE EXPANSÉ

(30) Priority: 05.03.2020 JP 2020037726
(43) Date of publication of application: 11.01.2023
(73) Proprietor: Mitsui Chemicals, Inc., Tokyo 104-0028 (JP)
(72) Inventor: AOKI, Wataru, Tamba-shi, Hyogo 669-3315 (JP); HASHIGUCHI, Takuya, Sodegaura-shi, Chiba 299-0265 (JP); MORITA, Hirofumi, Sodegaura-shi, Chiba 299-0265 (JP)
(74) Representative: Hoffmann Eitle
(86) International application number: PCT/JP2021/007399
(87) International publication number: WO 2021/177175

(56) References cited:
- EP-A1- 3 587 466
- WO-A1-2018/092744
- WO-A1-2020/075651
- CN-A- 102 383 311
- JP-A- 2013 023 656

## Description

### TECHNICAL FIELD

The present invention relates to a foamable polyurethane resin composition and a foamed polyurethane elastomer.

### BACKGROUND ART

Conventionally, foamed polyurethane elastomers have been used as buffer materials, shock absorbers, vibration absorbers, cushion materials, mattress materials, and sound absorbers.

As such a foamed polyurethane elastomer, for example, a foamed polyurethane elastomer has been known which is obtained by injecting a polyurethane resin composition containing an isocyanate group-terminated prepolymer and a polyol into a mold to be then foamed and cured, and by molding it into a desired shape.

As such a foamed polyurethane elastomer, more specifically, a polyurethane foam has been known which is obtained by mixing an isocyanate group-terminated prepolymer obtained by reaction of diphenylmethane diisocyanate (MDI) and polytetramethylene ether glycol (PTMEG), polytetramethylene ether glycol (PTMEG) and/or polyoxypropylene glycol (PPG), and ion-exchanged water as a foaming agent and by injecting the obtained mixture into the mold to be foamed (ref: for example, Patent Document 1). Patent Document 2 concerns foamed polyurethane elastomers. 1,4-Bis(isocyanatomethyl)cyclohexane (1,4-BIC) is used in the prepolymers of examples 20 and 21.

### Citation List

### Patent Document

Patent Document 1: Japanese Unexamined Patent Publication No. 2017-105913;
Patent Document 2: EP 3 587 466

### SUMMARY OF THE INVENTION

### PROBLEM TO BE SOLVED BY THE INVENTION

On the other hand, such a foamed polyurethane may be required to achieve both excellent breaking properties (strength, elongation) and excellent bending resistance in accordance with its application.

The present invention provides a foamable polyurethane resin composition which is capable of obtaining a foamed polyurethane elastomer having excellent breaking properties (strength, elongation) and bending resistance, and a foamed polyurethane elastomer having excellent breaking properties (strength, elongation) and bending resistance.

### MEANS FOR SOLVING THE PROBLEM

The present invention [1] includes a foamable polyurethane resin composition including a polyisocyanate material, a polyol material, water, and a catalyst, wherein the polyisocyanate material contains 1,4-bis(isocyanatomethyl)cyclohexane; the polyol material contains crystalline polytetramethylene ether glycol and noncrystalline polytetramethylene ether glycol and/or polyoxypropylene glycol; the total amount of the crystalline polytetramethylene ether glycol, the noncrystalline polytetramethylene ether glycol, and the polyoxypropylene glycol is 90% by mass or more with respect to the total amount of the polyol material; and a ratio of the crystalline polytetramethylene ether glycol is 60% by mass or more and 90% by mass or less with respect to the total amount of the crystalline polytetramethylene ether glycol, the noncrystalline polytetramethylene ether glycol, and the polyoxypropylene glycol.

The present invention [2] includes the foamable polyurethane resin composition described in the above-described [1], wherein the foamable polyurethane resin composition includes a first liquid containing an isocyanate group-terminated prepolymer which is a reaction product of the polyisocyanate material and a portion of the polyol material, and a second liquid containing a remaining portion of the portion of the polyol material, the water, and the catalyst.

The present invention [3] includes the foamable polyurethane resin composition described in the above-described [1] or [2], wherein the catalyst includes 1,3,5-tris[3-(dimethylamino)propyl]hexahydro-s-triazine.

The present invention [4] includes a foamed polyurethane elastomer including a foamed cured product of the foamable polyurethane resin composition described in any one of the above-described [1] to [3].

### EFFECT OF THE INVENTION

In the foamable polyurethane resin composition of the present invention, the polyisocyanate material contains the 1,4-bis(isocyanatomethyl)cyclohexane; the polyol material contains the crystalline polytetramethylene ether glycol and the noncrystalline polytetramethylene ether glycol and/or the polyoxypropylene glycol; the total amount of the crystalline polytetramethylene ether glycol, the noncrystalline polytetramethylene ether glycol, and the polyoxypropylene glycol is 90% by mass or more with respect to the total amount of the polyol material; and the ratio of the crystalline polytetramethylene ether glycol is 60% by mass or more and 90% by mass or less with respect to the total amount of the crystalline polytetramethylene ether glycol, the noncrystalline polytetramethylene ether glycol, and the polyoxypropylene glycol.

That is, the 1,4-bis(isocyanatomethyl)cyclohexane, the crystalline polytetramethylene ether glycol, the noncrystalline polytetramethylene ether glycol, and/or the polyoxypropylene glycol are included in good balance.

Therefore, according to the foamable polyurethane resin composition, it is possible to obtain the foamed polyurethane elastomer having excellent breaking properties (strength, elongation) and bending resistance.

Further, since the foamed polyurethane elastomer of the present invention is a foamed cured product of the above-described foamable polyurethane resin composition, it has excellent breaking properties (strength, elongation) and bending resistance.

### DESCRIPTION OF EMBODIMENTS

A foamable polyurethane resin composition of the present invention is a composition for a foamed polyurethane elastomer for producing a foamed polyurethane elastomer, and includes a polyisocyanate material, a polyol material, water, and a catalyst.

Although the details are described later, the polyisocyanate material and the polyol material may be included in the foamable polyurethane resin composition in an unreacted state, and a reaction product (described later) of the polyisocyanate material and a portion of the polyol material may be included in the foamable polyurethane resin composition.

From the viewpoint of discoloration resistance and breaking properties (strength, elongation), the polyisocyanate material contains, as an essential element, 1,4-bis(isocyanatomethyl)cyclohexane (1,4-H₆XDI).

The 1,4-bis(isocyanatomethyl)cyclohexane is prepared, for example, in conformity with the descriptions of International Patent Publication No. WO2009/051114, Japanese Unexamined Patent Publication No. 2011-140618.

In addition, the 1,4-bis(isocyanatomethyl)cyclohexane contains geometric isomers of cis-1,4-bis(isocyanatomethyl)cyclohexane (hereinafter, referred to as a cis-isomer) and trans-1,4-bis(isocyanatomethyl)cyclohexane (hereinafter, referred to as a trans-isomer).

The 1,4-bis(isocyanatomethyl)cyclohexane preferably contains the trans-isomer in a larger amount than the cis-isomer (hereinafter, referred to as a high trans-isomer).

The high trans-isomer of the 1,4-bis(isocyanatomethyl)cyclohexane contains the trans-isomer at a ratio of, for example, 50 mol% or more, preferably 75 mol% or more, more preferably 80 mol% or more, further more preferably 85 mol% or more, and for example, 96 mol% or less, preferably 93 mol% or less. In the high trans-isomer of the 1,4-bis(isocyanatomethyl)cyclohexane, the cis-isomer is a remaining portion of the trans-isomer.

The 1,4-bis(isocyanatomethyl)cyclohexane is preferably a high trans-isomer of the 1,4-bis(isocyanatomethyl)cyclohexane.

Further, the 1,4-bis(isocyanatomethyl)cyclohexane may be a monomer, or may be a derivative (for example, an isocyanurate modified product, an iminooxadiazinedione modified product, an allophanate modified product, a polyol modified product, a biuret modified product, a urea modified product, an oxadiazine trione modified product, a carbodiimide modified product, a uretdione modified product, a uretonimine modified product).

Preferably, the 1,4-bis(isocyanatomethyl)cyclohexane is a monomer.

Also, the polyisocyanate material can contain, as an optional element, another polyisocyanate (polyisocyanate excluding the 1,4-H₆XDI).

Examples of the other polyisocyanate include aliphatic polyisocyanates, aromatic polyisocyanates, and araliphatic polyisocyanates.

Examples of the aliphatic polyisocyanate include chain aliphatic diisocyanates such as ethylene diisocyanate, trimethylene diisocyanate, tetramethylene diisocyanate, pentamethylene diisocyanate (PDI), hexamethylene diisocyanate (HDI), octamethylene diisocyanate, nonamethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecamethylene triisocyanate, 1,3,6-hexamethylene triisocyanate, 1,8-diisocyanate-4-isocyanatomethyloctane, 2,5,7-trimethyl-1,8-diisocyanate-5-isocyanatomethyloctane, bis(isocyanatoethyl)carbonate, bis(isocyanatoethyl)ether, 1,4-butylene glycol dipropyl ether-ω,ω'-diisocyanate, lysine isocyanatomethyl ester, lysine triisocyanate, 2-isocyanatoethyl-2,6-diisocyanatehexanoate, 2-isocyanatopropyl-2,6-diisocyanatehexanoate, bis(4-isocyanate-n-butylidene)pentaerythritol, and 2,6-diisocyanatemethylcaproate.

Further, examples of the aliphatic polyisocyanate include alicyclic polyisocyanates (excluding the 1,4-H₆XDI).

Examples of the alicyclic polyisocyanate (excluding the 1,4-H₆XDI) include alicyclic diisocyanates such as isophorone diisocyanate (IPDI), trans,trans-, trans,cis-, and cis,cis-dicyclohexylmethane diisocyanate and a mixture of these (hydrogenated MDI), 1,3- or 1,4-cyclohexane diisocyanate and a mixture of these, 1,3-bis(isocyanatomethyl)cyclohexane (1,3-H₆XDI), 1,3- or 1,4-bis(isocyanatoethyl)cyclohexane, methylcyclohexane diisocyanate, 2,2'-dimethyldicyclohexylmethane diisocyanate, dimer acid diisocyanate, 2,6-diisocyanatomethylbicyclo[2,2,1]-heptane (NBDI) as an isomer thereof, 2-isocyanatomethyl 2-(3-isocyanatopropyl)-5-isocyanatomethylbicyclo-[2,2,1]-heptane, 2-isocyanatomethyl-2-(3-isocyanatopropyl)-6-isocyanatomethylbicyclo-[2,2,1]-heptane, 2-isocyanatomethyl-3-(3-isocyanatopropyl)-5-(2-isocyanatoethyl)-bicyclo-[2,2,1]-heptane, 2-isocyanatomethyl-3-(3-isocyanatopropyl)-6-(2-isocyanatoethyl)-bicyclo-[2,2,1]-heptane, 2-isocyanatomethyl-2-(3-isocyanatopropyl)-5-(2-isocyanatoethyl)-bicyclo-[2,2,1]-heptane, and 2-isocyanatomethyl-2-(3-isocyanatopropyl)-6-(2-isocyanatoethyl)-bicyclo-[2,2,1]-heptane.

Examples of the aromatic polyisocyanate include aromatic diisocyanates such as 2,4-tolylene diisocyanate, 2,6-tolylene diisocyanate, and an isomer mixture (TDI) of these tolylene diisocyanates; 4,4'-diphenylmethane diisocyanate, 2,4'-diphenylmethane diisocyanate, 2,2'-diphenylmethane diisocyanate, and an optional isomer mixture (MDI) of these diphenylmethane diisocyanates; toluidine diisocyanate (TODI); paraphenylene diisocyanate; and naphthalene diisocyanate (NDI).

Examples of the araliphatic polyisocyanate include araliphatic diisocyanates such as 1,3-or 1,4-xylylenediisocyanate and a mixture thereof (XDI) and 1,3- or 1,4-tetramethylxylylene diisocyanate or a mixture thereof (TMXDI).

Further, the other polyisocyanate may be a monomer, or may be a derivative (for example, an isocyanurate modified product, an iminooxadiazinedione modified product, an allophanate modified product, a polyol modified product, a biuret modified product, a urea modified product, an oxadiazine trione modified product, a carbodiimide modified product, a uretdione modified product, a uretonimine modified product).

These other polyisocyanates may be used alone or in combination of two or more.

As another polyisocyanate, preferably, monomers of alicyclic polyisocyanates (excluding the 1,4-H₆XDI) are used, more preferably, monomers of 1,3-bis(isocyanatomethyl)cyclohexane (1,3-H₆XDI) are used.

A content ratio of the other polyisocyanate is appropriately set as long as it does not inhibit the excellent effect of the present invention, and is, for example, 30% by mass or less, preferably 20% by mass or less, more preferably 10% by mass or less, particularly preferably 0% by mass with respect to the total amount of the polyisocyanate material.

In other words, the polyisocyanate material particularly preferably consists of the 1,4-bis(isocyanatomethyl)cyclohexane from the viewpoint of breaking properties (strength, elongation), hardness, and discoloration resistance.

The polyol material contains, as an essential element, a high molecular weight polyol.

The high molecular weight polyol is a compound having a number average molecular weight (molecular weight in terms of standard polyoxyethylene by GPC, or a molecular weight calculated based on an average hydroxyl value and an average functionality (hereinafter, the same)) of 250 or more and 10000 or less and having two or more hydroxyl groups.

The high molecular weight polyol contains, as an essential element, crystalline polytetramethylene ether glycol and noncrystalline polytetramethylene ether glycol and/or polyoxypropylene glycol.

In other words, the polyol material contains, as an essential element, the crystalline polytetramethylene ether glycol and at least any one kind selected from the group consisting of the noncrystalline polytetramethylene ether glycol and the polyoxypropylene glycol.

The crystalline polytetramethylene ether glycol (crystalline PTMEG, crystalline PTG) is crystalline polyether diol (dihydric polyol) having an oxy straight-chain alkylene group (-CH₂CH₂CH₂CH₂O-) having four carbon atoms as a main chain.

The crystallinity indicates solid (viscosity at 10°C measured with an E-type viscometer of above 500000 mPa·s) at normal temperature (25°C).

An example of the crystalline polytetramethylene ether glycol includes a ring-opening polymer obtained by cationic polymerization of tetrahydrofuran.

These crystalline polytetramethylene ether glycols may be used alone or in combination of two or more.

A number average molecular weight of the crystalline polytetramethylene ether glycol is 250 or more, preferably 400 or more, more preferably 500 or more, further more preferably 600 or more, and for example, 10000 or less, preferably 5000 or less, more preferably 3000 or less.

The noncrystalline polytetramethylene ether glycol (noncrystalline PTMEG, noncrystalline PTG) is noncrystalline polyether diol (dihydric polyol) having an oxy straight-chain alkylene group (-CH₂CH₂CH₂CH₂O-) having four carbon atoms as a main chain.

The noncrystalline properties indicate liquid (viscosity at 10°C measured with an E-type viscometer of 500000 mPa·s or less, preferably 400000 mPa·s or less) at normal temperature (25°C).

An example of the noncrystalline polytetramethylene ether glycol includes noncrystalline polytetramethylene ether glycol obtained by copolymerizing a polymerization unit of tetrahydrofuran with short-chain diol.

Examples of the short-chain diol include ethylene glycol, propylene glycol, 1,3-propanediol, 1,4-butylene glycol, 1,3-butylene glycol, 1,2-butylene glycol, 1,5-pentanediol, 1,6-hexanediol, diethylene glycol, triethylene glycol, dipropylene glycol, 2,2-dimethyl-1,3-propanediol, and 3-methyl-1,5-pentanediol. These short-chain diols may be used alone or in combination of two or more.

Further, examples of the noncrystalline polytetramethylene ether glycol include noncrystalline polytetramethylene ether glycols obtained by copolymerizing ethylene oxide, propylene oxide, epichlorohydrin, 2-methyltetrahydrofuran, 3-methyltetrahydrofuran, and/or benzyl glycidyl ether into a polymerization unit of tetrahydrofuran.

These noncrystalline polytetramethylene ether glycols may be used alone or in combination of two or more.

A number average molecular weight of the noncrystalline polytetramethylene ether glycol is 250 or more, preferably 400 or more, more preferably 500 or more, further more preferably 600 or more, and for example, 10000 or less, preferably 5000 or less, more preferably 4000 or less, further more preferably 3000 or less, particularly preferably 2000 or less.

The polyoxypropylene glycol (PPG) is polyether diol (dihydric polyol) having an oxy branched-chain alkylene group (-CH(CH₃)CH₂O-) having three carbon atoms as a main chain.

An example of the polyoxypropylene glycol includes an addition polymer of propylene oxide using the above-described short-chain diol as an initiator.

Further, a molecular terminal of the polyoxypropylene glycol may be modified by ethylene oxide if necessary.

In such a case, the oxyethylene group content is, for example, 5% by mass or more, preferably 10% by mass or more, and for example, 50% by mass or less, preferably 30% by mass or less with respect to the total amount of the polyoxypropylene glycol having a molecular terminal modified by the ethylene oxide. The oxyethylene group content is calculated from charged mixing formulations.

These polyoxypropylene glycols (including the polyoxypropylene glycol having a molecular terminal modified by the ethylene oxide (hereinafter, the same)) may be used alone or in combination of two or more.

A number average molecular weight of the polyoxypropylene glycol is 250 or more, preferably 400 or more, more preferably 500 or more, further more preferably 600 or more, and for example, 10000 or less, preferably 8000 or less, more preferably 6000 or less, further more preferably 5000 or less.

The polyol material may contain any of the noncrystalline polytetramethylene ether glycol and the polyoxypropylene glycol, and if necessary, may contain both the noncrystalline polytetramethylene ether glycol and the polyoxypropylene glycol.

From the viewpoint of breaking properties (strength, elongation), the polyol material preferably contains the polyoxypropylene glycol.

In addition, from the viewpoint of bending resistance, the polyol material preferably contains the noncrystalline polytetramethylene ether glycol.

Also, the polyol material may contain, as an optional element, another macropolyol.

Examples of the other macropolyol include macropolyols excluding the crystalline polytetramethylene ether glycol, the noncrystalline polytetramethylene ether glycol, and the polyoxypropylene glycol, and examples thereof include polyoxyethylene glycol, polyoxypropylene triol, polytrimethylene ether glycol, polyester polyol, polycarbonate polyol, polyurethane polyol, epoxy polyol, vegetable oil polyol, polyolefin polyol, acrylic polyol, silicone polyol, fluorine polyol, and vinyl monomer-modified polyol.

These other macropolyols may be used alone or in combination of two or more. Preferably, the polyol material does not contain the other macropolyol.

Further, the polyol material may contain, as an optional element, a low molecular weight polyol.

The low molecular weight polyol is a compound having a molecular weight of 60 or more and below 250, preferably 200 or less and having two or more hydroxyl groups.

Examples of the low molecular weight polyol include dihydric alcohols (for example, straight-chain alkyldiols having 2 to 10 carbon atoms such as ethylene glycol, 1,3-propanediol, 1,4-butanediol, 1,5-pentanediol, and 1,6-hexanediol; branched-chain alkyldiols having 3 to 10 carbon atoms such as propylene glycol, 1,3-butanediol, 1,2-butanediol, 3-methyl-1,5-pentanediol, and 2,6-dimethyl-1-octen-3,8-diol; ether diols such as diethylene glycol, triethylene glycol, and dipropylene glycol; 1,4-dihydroxy-2-butene, isosorbide, 1,3- or 1,4-cyclohexanedimethanol, a mixture of these, 1,4-cyclohexanediol, hydrogenated bisphenol A, and bisphenol A; dihydric alkanolamines such as methyldiethanolamine and methyldiisopropanolamine ), trihydric alcohols (for example, glycerin, trimethylolpropane), tetrahydric alcohols (for example, tetramethylolmethane (pentaerythritol), diglycerin), pentahydric alcohols (for example, xylitol), hexahydric alcohols (for example, sorbitol), and heptahydric alcohols (for example, perseitol).

These low molecular weight polyols may be used alone or in combination of two or more.

As the low molecular weight polyol, preferably, dihydric alcohols are used, more preferably, straight-chain alkyldiols having 2 to 10 carbon atoms are used, further more preferably, straight-chain alkyldiols having 2 to 6 carbon atoms are used, particularly preferably, 1,4-butanediol is used.

The polyol material preferably consists of the crystalline polytetramethylene ether glycol, the noncrystalline polytetramethylene ether glycol and/or the polyoxypropylene glycol, and the dihydric alcohol, and more preferably consists of the crystalline polytetramethylene ether glycol, the noncrystalline polytetramethylene ether glycol and/or the polyoxypropylene glycol, and the straight-chain alkyldiol having 2 to 10 carbon atoms.

From the viewpoint of breaking properties (strength, elongation), the polyol material particularly preferably consists of the crystalline polytetramethylene ether glycol, the polyoxypropylene glycol, and the straight-chain alkyldiol having 2 to 6 carbon atoms.

In addition, from the viewpoint of bending resistance, the polyol material particularly preferably consists of the crystalline polytetramethylene ether glycol, the noncrystalline polytetramethylene ether glycol, and the straight-chain alkyldiol having 2 to 6 carbon atoms.

The total amount of the crystalline polytetramethylene ether glycol, the noncrystalline polytetramethylene ether glycol, and the polyoxypropylene glycol is 90% by mass or more, preferably 92% by mass or more, more preferably 94% by mass or more, and for example, 99% by mass or less, preferably 98% by mass or less with respect to the total amount of the polyol material from the viewpoint of breaking properties (strength, elongation) and bending resistance.

Further, a content ratio of the crystalline polytetramethylene ether glycol is, for example, 50% by mass or more, preferably 60% by mass or more, and for example, 85% by mass or less, preferably 80% by mass or less with respect to the total amount of the polyol material.

Further, a content ratio of the noncrystalline polytetramethylene ether glycol and the polyoxypropylene glycol is, for example, 5% by mass or more, preferably 10% by mass or more, and for example, 50% by mass or less, preferably 40% by mass or less with respect to the total amount of the polyol material.

**In** addition, when the polyol material contains another macropolyol and/or the low molecular weight polyol (preferably, when the polyol material contains the low molecular weight polyol), a content ratio (total amount) of the other macropolyol and the low molecular weight polyol is, for example, 0% by mass or more, preferably 2% by mass or more, and for example, 10% by mass or less, preferably 8% by mass or less, more preferably 6% by mass or less with respect to the total amount of the polyol material.

Then, a ratio (total amount) of the crystalline polytetramethylene ether glycol is, from the viewpoint of breaking properties (strength, elongation), hardness, and discoloration resistance, 60% by mass or more, preferably 65% by mass or more, more preferably 70% by mass or more, and from the viewpoint of bending resistance, 90% by mass or less, preferably 85% by mass or less, more preferably 80% by mass or less with respect to the total amount of the crystalline polytetramethylene ether glycol, the noncrystalline polytetramethylene ether glycol, and the polyoxypropylene glycol. Further, a ratio (total amount) of the noncrystalline polytetramethylene ether glycol and/or the polyoxypropylene glycol is 10% by mass or more, preferably 15% by mass or more, more preferably 20% by mass or more, and 40% by mass or less, preferably 35% by mass or less, more preferably 30% by mass or less.

An average number of hydroxyl groups (average functionality) of the polyol material is, for example, 2 or more, and for example, 5 or less, preferably 4 or less, more preferably 3 or less, further more preferably 2.5 or less, particularly preferably 2. The average number of hydroxyl groups (average functionality) can be calculated from the charged components (hereinafter, the same).

The total amount of the polyol material in the foamable polyurethane resin composition is appropriately set so as to have an isocyanate index to be described later with respect to the polyisocyanate material.

Water is a foaming agent for producing the foamed polyurethane elastomer (described later).

In addition, the water may be used in combination with another foaming agent (foaming agent excluding the water).

Examples of the other foaming agent include halogen-substituted aliphatic hydrocarbons such as trichlorofluoromethane, dichlorodifluoromethane, trichloroethane, trichloroethylene, tetrachloroethylene, methylene chloride, trichlorotrifluoroethane, dibromotetrafluoroethane, and carbon tetrachloride. These other foaming agents may be used alone or in combination of two or more.

The other foaming agent is preferably not contained in the foamable polyurethane resin composition.

In other words, preferably, the water is used alone as a foaming agent.

A ratio of the water is appropriately set in accordance with its purpose and application, and is, for example, 0.50% by mass or more, preferably 0.60% by mass or more, more preferably 0.70% by mass or more, further more preferably 0.75% by mass or more, even more preferably 0.80% by mass or more, still more preferably 0.85% by mass or more, particularly preferably 0.90% by mass or more, and for example, 5.00% by mass or less, preferably 3.00% by mass or less, more preferably 1.50% by mass or less, further more preferably 1.20% by mass or less, particularly preferably 1.00% by mass or less with respect to the total mass of the foamable polyurethane resin composition.

Examples of the catalyst include metal catalysts and nitrogen-containing organic catalysts.

Examples of the metal catalyst include bismuth-containing metal catalysts such as bismuth(III) neodecanoate and bismuth(III) octylate; zinc-containing metal catalysts such as zinc octylate, zinc diacetylacetonate, Zn-K-KAT XK-633 (manufactured by King Industries, Inc.), and Zn-K-KATXK-614 (manufactured by King Industries, Inc.); tin-containing metal catalysts such as inorganic tin compounds (for example, tin acetate, tin octylate) and organic tin compounds (for example, dibutyltin dilaurate, dibutyltin chloride, dimethyltin dineodecanoate, dimethyltin dithioglycolate); lead-containing metal catalysts such as lead octylate and lead naphthalate; nickel-containing metal catalysts such as nickel naphthenate and nickel acetylacetonate; zirconium-containing metal catalysts such as zirconium tetraacetylacetate; alkali metal-containing metal catalysts such as potassium octylate, sodium octylate, potassium carbonate, and sodium carbonate; cobalt-containing metal catalysts such as cobalt octylate and cobalt acetylacetonate; manganese-containing metal catalysts such as manganese octylate and manganese acetylacetonate; and aluminum-containing metal catalysts such as aluminum acetylacetonate. These may be used alone or in combination of two or more.

As the metal catalyst, preferably, a bismuth-containing metal catalyst and a zinc-containing metal catalyst are used in combination.

Examples of the nitrogen-containing organic catalyst include nitrogen-containing organic catalysts having an aromatic ring (hereinafter, referred to as a nitrogen-containing aromatic catalyst) and nitrogen-containing organic catalysts having no aromatic ring (hereinafter, referred to as a nitrogen-containing aliphatic catalyst).

Examples of the nitrogen-containing aromatic catalyst include imidazole catalysts (heteroaromatic catalyst), and specific examples thereof include imidazole compounds such as imidazole, 1,2-dimethylimidazole, 2-ethyl-4-methylimidazole, and 1-isobutyl-2-methylimidazole. These may be used alone or in combination of two or more.

Examples of the nitrogen-containing aliphatic catalyst include heteroalicyclic catalysts, and specific examples thereof include hexahydrotriazine compounds such as 1,3,5-tris[3-(dimethylamino)propyl]hexahydro-s-triazine, 1,3,5-tris[3-(dimethylamino)ethyl]hexahydro-s-triazine, and 1,3,5-tris[3-(dimethylamino)methyl]hexahydro-s-triazine, triethylenediamine, 1,8-diazabicyclo(5,4,0)-7-undecene, N-methyl-N'-(2-dimethylaminoethyl)piperazine, N-methylmorpholine, N-ethylmorpholine, and N-(N',N'-dimethylaminoethyl)morpholine. These may be used alone or in combination of two or more.

Further, examples of the nitrogen-containing aliphatic catalyst include aliphatic amine catalysts, and specific examples thereof include tertiary amine compounds such as triethylamine, triethylenediamine, bis(dimethylaminoethyl)ether, and N,N,N',N'-tetramethylethylenediamine and quaternary ammonium salt compounds such as tetraethylhydroxylammonium, 2-hydroxypropyltrimethylammonium, and tetrabutylammonium. These may be used alone or in combination of two or more.

The catalyst may contain the nitrogen-containing organic catalyst or may not contain the nitrogen-containing organic catalyst.

From the viewpoint of improving the bending resistance, as the catalyst, preferably, a nitrogen-containing organic catalyst is used, more preferably, a nitrogen-containing aliphatic catalyst is used, further more preferably, a heteroalicyclic catalyst is used, even more preferably, a hexahydrotriazine compound is used, particularly preferably, 1,3,5-tris[3-(dimethylamino)propyl]hexahydro-s-triazine is used.

The ratio (total amount) of the catalyst is appropriately set in accordance with its purpose and application with respect to the total amount of the foamable polyurethane resin composition.

More specifically, the ratio (total amount of the metal catalyst and the nitrogen-containing organic catalyst) of the catalyst is, for example, 1 part by mass or more, preferably 3 parts by mass or more, and for example, 10 parts by mass or less, preferably 8 parts by mass or less with respect to 100 parts by mass of the polyol material.

In addition, a ratio of the metal catalyst is, for example, 80 parts by mass or more, preferably 85 parts by mass or more, and for example, 100 parts by mass or less, preferably 97 parts by mass or less with respect to 100 parts by mass of the total amount of the catalyst. Further, a ratio of the nitrogen-containing organic catalyst is, for example, 0 parts by mass or more, preferably 3 parts by mass or more, and for example, 20 parts by mass or less, preferably 15 parts by mass or less.

Further, the foamable polyurethane resin composition may contain, if necessary, a cross-linking agent, a foam stabilizer, and a stabilizer (an antioxidant, an ultraviolet absorber, a light-resistant stabilizer).

The cross-linking agent is, for example, added to the foamable polyurethane resin composition in order to improve molding stability of the foamed polyurethane elastomer (described later).

Examples of the cross-linking agent include alkanolamines, quaternary aliphatic amines, aliphatic secondary diamines, and alicyclic secondary diamines, and preferably, alkanolamines are used.

Examples of the alkanolamine include polyalkanolamines such as trialkanolamines (triC2 to C4 alkanolamine) including trimethanolamine, triethanolamine, tripropanolamine, triisopropanolamine, and tributanolamine and dialkanolamines (diC2 to C4 alkanolamine) including diethanolamine, and monoethanolamines. Preferably, dialkanolamines are used.

These cross-linking agents may be used alone or in combination of two or more.

As the cross-linking agent, preferably, alkanolamines are used, more preferably, polyalkanolamines are used, further more preferably, dialkanolamines are used, particularly preferably, diethanolamines are used.

A content ratio of the cross-linking agent is, from the viewpoint of molding stability, for example, 0.01% by mass or more, preferably 0.1% by mass or more, and from the viewpoint of discoloration resistance, for example, 1% by mass or less, preferably 0.5% by mass or less with respect to the total amount of the foamable polyurethane resin composition.

As the foam stabilizer, a known foam stabilizer which is commonly available in the production of a foamed polyurethane elastomer can be used.

Examples of the foam stabilizer include silicone-based foam stabilizers such as L-568, L-580, L-590, L-598, L-600, L-620, L-635, L-638, L-650, L-680, L-682, SC-155, Y-10366, Y-10366J, L-5309, L-5614, L-5617, L-5627, L-5639, L-5624, L-5690, L-5693, L-5698, L-6100, and L-6900 manufactured by Momentive Performance Materials; F-607, F606, F-242T, F-114, and F-348 manufactured by Shin-Etsu Chemical Co., Ltd.; DC5598, DC5933, DC5609, DC5986, DC5950, DC2525, DC2585, DC6070, DC3043, B-8404, B-8407, B-8465, B-8444, B-8467, B-8433, B-8466, B-8545, and B-8450 manufactured by Evonik Industries AG; and SZ-1919, SH-192, SH-190, SZ-580, SRX280A, SZ-584, SF2904, SZ-5740M, SZ-1142, and SZ-1959 manufactured by Dow Corning Toray Silicone Co., Ltd.

Examples of the foam stabilizer also include fluorine-based foam stabilizers, and examples thereof include SURFRON S-242, SURFRON S-243, SURFRON S-386, SURFRON S-647, SURFRON S-651, SURFRON S-653, and SURFRON AF-5000 manufactured by AGC SEIMI CHEMICAL CO., LTD.

These foam stabilizers may be used alone or in combination of two or more.

The content ratio of the foam stabilizer can be appropriately set in accordance with its purpose and application.

Examples of the stabilizer include antioxidants (for example, hindered phenol compound, organic phosphorus compound, thioether-based compound, hydroxylamine-based compound), ultraviolet absorbers (for example, benzotriazole compound, formamidine-based compound), and light-resistant stabilizers (for example, hindered amine compound).

These stabilizers may be used alone or in combination of two or more.

The content ratio of the stabilizer is appropriately set in accordance with its purpose and application.

Then, each of the above-described components may be contained in the foamable polyurethane resin composition in an unreacted state, or may be contained in the foamable polyurethane resin composition in a state where a portion of each of the above-described components is reacted.

Preferably, in the foamable polyurethane resin composition, the polyisocyanate material and a portion of the polyol material react with each other, and the isocyanate group-terminated prepolymer as a reaction product thereof is contained in the foamable polyurethane resin composition.

In other words, the foamable polyurethane resin composition preferably contains the isocyanate group-terminated prepolymer, and further, contains a remaining portion corresponding to the above-described portion of the polyol material (hereinafter, simply referred to as a remaining portion), water, and a catalyst.

In addition, in such a case, the foamable polyurethane resin composition can be, for example, prepared as a one component-type foamable polyurethane resin composition containing all the isocyanate group-terminated prepolymer, a remaining portion of the polyol material, the water, and the catalyst.

In addition, the foamable polyurethane resin composition can be, for example, also prepared as a two component-type foamable polyurethane resin composition containing a first liquid containing the isocyanate group-terminated prepolymer and a second liquid containing a remaining portion of the polyol material, the water, and the catalyst separately.

The water and the catalyst are separately prepared from the first liquid and the second liquid, and may be added at the time of blending of the first liquid and the second liquid. Further, a third liquid containing the water and/or the catalyst is prepared separately from the first liquid and the second liquid, and the foamable polyurethane resin composition may be also prepared as a three component-type foamable polyurethane resin composition containing the first liquid, the second liquid, and the third liquid.

Preferably, the foamable polyurethane resin composition is the two component-type foamable polyurethane resin composition containing the first liquid containing the isocyanate group-terminated prepolymer and the second liquid containing a remaining portion of the polyol material, the water, and the catalyst; or the three component-type foamable polyurethane resin composition containing the first liquid containing the isocyanate group-terminated prepolymer, the second liquid containing a remaining portion of the polyol material and the water, and the third liquid containing the catalyst.

Hereinafter, the two component-type foamable polyurethane resin composition containing the first liquid and the second liquid is described in detail.

In the following, the polyol material used for preparation of the isocyanate group-terminated prepolymer is referred to as a polyol for prepolymer. In other words, the polyol for prepolymer is a portion of the above-described polyol material.

In addition, in the following, the polyol material which reacts with the isocyanate group-terminated prepolymer is referred to as a polyol for foam molding. In other words, the polyol for foam molding is a remaining portion of the above-described polyol material.

Each of the essential elements (the crystalline polytetramethylene ether glycol and the noncrystalline polytetramethylene ether glycol and/or the polyoxypropylene glycol) of the polyol material may be contained in the polyol for prepolymer, may be contained in the polyol for foam molding, or further may be contained in both of these.

More specifically, in the two component-type foamable polyurethane resin composition, the first liquid is a polyisocyanate liquid. The polyisocyanate liquid contains the isocyanate group-terminated prepolymer which is a reaction product of the polyisocyanate material and the polyol for prepolymer.

The polyisocyanate material contains the 1,4-bis(isocyanatomethyl)cyclohexane, and preferably consists of the 1,4-bis(isocyanatomethyl)cyclohexane.

The polyol for prepolymer preferably contains the high molecular weight polyol, and from the viewpoint of breaking properties (strength, elongation), more preferably contains the crystalline polytetramethylene ether glycol.

In addition, the polyol for prepolymer may further contain the noncrystalline polytetramethylene ether glycol and/or the polyoxypropylene glycol from the viewpoint of bending resistance.

That is, the polyol for prepolymer preferably consists of the crystalline polytetramethylene ether glycol, or consists of the crystalline polytetramethylene ether glycol and the noncrystalline polytetramethylene ether glycol and/or the polyoxypropylene glycol.

The polyol for prepolymer particularly preferably consists of the crystalline polytetramethylene ether glycol without containing the noncrystalline polytetramethylene ether glycol and/or the polyoxypropylene glycol from the viewpoint of breaking properties (strength, elongation).

In addition, the polyol for prepolymer particularly preferably consists of the noncrystalline polytetramethylene ether glycol and/or the polyoxypropylene glycol, or the crystalline polytetramethylene ether glycol and the noncrystalline polytetramethylene ether glycol and/or the polyoxypropylene glycol from the viewpoint of bending resistance.

To prepare the isocyanate group-terminated prepolymer, first, the polyisocyanate material and the polyol for prepolymer (a portion of the polyol material) are mixed so that an isocyanate index (value obtained by multiplying a ratio of the isocyanate group concentration (NCO concentration) of the polyisocyanate material to the hydroxyl group concentration of the polyol for prepolymer by 100, NCO concentration/hydroxyl group concentration×100) is, for example, a ratio above 100, preferably 105 or more, and for example, 1000 or less, preferably 600 or less, more preferably 500 or less, and the obtained mixture is reacted until a predetermined content ratio of the isocyanate group.

A reaction temperature is, for example, 50°C or more, and for example, 120°C or less, preferably 100°C or less.

Further, the reaction time is, for example, 0.5 hours or more, preferably 1 hour or more, and for example, 15 hours or less, preferably 10 hours or less.

In addition, in the reaction, if necessary, the above-described metal catalyst may be also added.

A mixing ratio of the metal catalyst is, in terms of mass, for example, 1 ppm or more, and for example, 500 ppm or less, preferably 100 ppm or less, more preferably 20 ppm or less with respect to the total amount of the polyisocyanate material and the material polyol.

Further, the mixing ratio of the metal catalyst is 0.01 parts by mass or more, and, for example, 5.00 parts by mass or less, preferably 1.00 part by mass or less, more preferably 0.20 parts by mass or less with respect to 10000 parts by mass of the total amount of the material isocyanate and the material polyol.

After the above-described reaction, if necessary, a residual monomer (specifically, an unreacted polyisocyanate material) can be also removed using a known distillation method.

Thus, the isocyanate group-terminated prepolymer can be also obtained as the first liquid (isocyanate liquid).

In addition, the first liquid may also contain, for example, unreacted 1,4-bis(isocyanatomethyl)cyclohexane (monomer) in addition to the isocyanate group-terminated prepolymer.

A ratio of the 1,4-bis(isocyanatomethyl)cyclohexane (monomer) is, for example, 0% by mass or more, preferably 5% by mass or more, and for example, 30% by mass or less, preferably 20% by mass or less with respect to the total amount of the first liquid.

When the ratio of the 1,4-bis(isocyanatomethyl)cyclohexane in the first liquid is within the above-described range, it is possible to adjust a ratio of a hard segment (hard segment concentration) in the foamed polyurethane elastomer, and adjust hardness and compression permanent set of the foamed polyurethane elastomer (described later).

Further, the first liquid may further contain another polyisocyanate (the above-described aliphatic polyisocyanate, the above-described aromatic polyisocyanate, the above-described araliphatic polyisocyanate, and derivatives of these) if necessary.

A ratio of the other polyisocyanate is, for example, 0% by mass or more, and for example, 50% by mass or less, preferably 25% by mass or less, particularly preferably 0% by mass with respect to the total amount of the first liquid. That is, the first liquid preferably does not contain the other polyisocyanate.

After the preparation, such a first liquid is subjected to the production of the foamed polyurethane elastomer to be described later, or stored.

In addition, in the two component-type foamable polyurethane resin composition, the second liquid is preferably a resin premix containing a polyol for foam molding (remaining portion of the polyol material), water, and a catalyst.

The polyol for foam molding preferably contains the high molecular weight polyol, more preferably contains the crystalline polytetramethylene ether glycol.

Also, the polyol for foam molding may further contain the noncrystalline polytetramethylene ether glycol and/or the polyoxypropylene glycol.

When the polyol for prepolymer does not contain the noncrystalline polytetramethylene ether glycol and/or the polyoxypropylene glycol, preferably, the polyol for foam molding contains the noncrystalline polytetramethylene ether glycol and/or the polyoxypropylene glycol.

Also, when the polyol for prepolymer contains the noncrystalline polytetramethylene ether glycol and/or the polyoxypropylene glycol, preferably, the polyol for foam molding does not contain the noncrystalline polytetramethylene ether glycol and/or the polyoxypropylene glycol.

Further, it is also preferable that both the polyol for prepolymer and the polyol for foam molding contain the crystalline polytetramethylene ether glycol and the noncrystalline polytetramethylene ether glycol and/or the polyoxypropylene glycol.

Further, the polyol for foam molding preferably contains the low molecular weight polyol, more preferably contains the dihydric alcohol, further more preferably contains the straight-chain alkyldiol having 2 to 10 carbon atoms, particularly preferably contains the straight-chain alkyldiol having 2 to 6 carbon atoms.

Specifically, a ratio of the low molecular weight polyol is, for example, 10% by mass or more, preferably 15% by mass or more, and for example, 100% by mass or less, preferably 50% by mass or less with respect to the total amount of the polyol for foam molding.

Further, the blending number of parts of the low molecular weight polyol is, for example, 1.0 part by mass or more, preferably 2.0 parts by mass or more, and for example, 10.0 parts by mass or less, preferably 5.0 parts by mass or less, more preferably 4.0 parts by mass or less with respect to 100 parts by mass of the polyisocyanate material.

In the preparation of the second liquid (resin premix), for example, the polyol for foam molding, the water, and the catalyst are blended and mixed.

The catalyst used for preparation of the second liquid (resin premix) may be a portion, or may be all. Preferably, a portion of the catalyst is used for the preparation of the resin premix.

Preferably, a nitrogen-containing aliphatic catalyst is used as a catalyst used for preparation of the second liquid (resin premix).

Further, if necessary, a foam stabilizer, a stabilizer, can be added to the second liquid (resin premix). An addition amount of the foam stabilizer and the stabilizer is appropriately set in accordance with its purpose and application.

Thus, the second liquid (resin premix) is prepared.

After the preparation, such a second liquid is subjected to the production of the foamed polyurethane elastomer to be described later, or stored.

Then, according to such a two component-type foamable polyurethane resin composition, it is possible to efficiently produce the foamed polyurethane elastomer.

In the following, a method for producing a foamed polyurethane elastomer is described in detail using the two component-type foamable polyurethane resin composition.

In this method, for example, first, each of the components of the above-described foamable polyurethane resin composition is prepared at the above-described ratio, thereby preparing the first liquid (isocyanate liquid) and the second liquid (resin premix).

Then, in this method, the above-described foamable polyurethane resin composition is foamed (foaming step).

More specifically, in the foaming step, the first liquid (polyisocyanate liquid) is blended into the second liquid (resin premix) to be mixed, thereby preparing a foamable mixture. At this time, the entire foamable polyurethane resin composition is blended into the foamable mixture.

In addition, the catalyst may be also blended into the foamable mixture. An example of the catalyst includes a remaining portion of the catalyst used for the preparation of the second liquid (resin premix), and specifically, examples thereof include metal catalysts.

In the foamable mixture, a mixing ratio of the first liquid and the second liquid is set so that an isocyanate index (NCO/(OH+H₂O))×100 (that is, a ratio of the total sum of the isocyanate group of the first liquid with respect to the total sum of the hydroxyl group and the water of the second liquid) is, for example, within the following range.

That is, the isocyanate index is, for example, 75 or more, preferably 85 or more, more preferably 90 or more, and for example, 300 or less, preferably 200 or less, further more preferably 150 or less.

Further, a liquid ratio (mass ratio) of the second liquid is, for example, 1 part by mass or more, preferably 3 parts by mass or more, more preferably 5 parts by mass or more, further more preferably 10 parts by mass or more, and for example, 200 parts by mass or less, preferably 100 parts by mass or less, more preferably 50 parts by mass or less with respect to 100 parts by mass of the first liquid.

Next, in this step, the foamable mixture is poured into a predetermined mold which is preheated if necessary, and the foamable mixture (foamable polyurethane resin composition) is foamed.

A preheating temperature of the mold is, for example, 50°C or more, preferably 60°C or more, and for example, 130°C or less, preferably 100°C or less, more preferably 90°C or less.

Then, the foamable mixture (foamable polyurethane resin composition) is foamed in the mold.

Thus, the foamable polyurethane resin composition is foamed and cured, thereby forming the foamed polyurethane elastomer, and the foamed polyurethane elastomer is molded into a predetermined shape.

A range of a reaction temperature (molding temperature) is the same as the range of the above-described preheating temperature.

The reaction time (molding time) is, for example, 5 minutes or more, preferably 10 minutes or more, and for example, 60 minutes or less, preferably 30 minutes or less, more preferably 20 minutes or less.

Next, the foamed polyurethane elastomer is demolded from the mold. Thereafter, if necessary, the foamed polyurethane elastomer may be aged at, for example, 40°C or more, preferably 50°C or more, more preferably 60°C or more, and for example, 130°C or less, preferably 100°C or less, more preferably 90°C or less within about 24 hours.

Thus, the foamed polyurethane elastomer is produced.

According to such a method, it is possible to efficiently obtain the foamed polyurethane elastomer having excellent breaking properties (strength, elongation) and bending resistance.

More specifically, in the above-described foamable polyurethane resin composition, the polyisocyanate material contains the 1,4-bis(isocyanatomethyl)cyclohexane; the polyol material contains the crystalline polytetramethylene ether glycol and the noncrystalline polytetramethylene ether glycol and/or the polyoxypropylene glycol; the total amount of the crystalline polytetramethylene ether glycol, the noncrystalline polytetramethylene ether glycol, and the polyoxypropylene glycol is 90% by mass or more with respect to the total amount of the polyol material; and the ratio of the crystalline polytetramethylene ether glycol is 60% by mass or more and 90% by mass or less with respect to the total amount of the crystalline polytetramethylene ether glycol, the noncrystalline polytetramethylene ether glycol, and the polyoxypropylene glycol.

That is, the 1,4-bis(isocyanatomethyl)cyclohexane, the crystalline polytetramethylene ether glycol, the noncrystalline polytetramethylene ether glycol, and/or the polyoxypropylene glycol are included in good balance.

Therefore, according to the foamable polyurethane resin composition, it is possible to obtain the foamed polyurethane elastomer having excellent breaking properties (strength, elongation) and bending resistance.

In other words, the improvement of the breaking properties (strength, elongation) and the improvement of the bending resistance are usually in a relationship of trade-off (that is, a relationship where the improvement of the breaking properties (strength, elongation) decreases the bending resistance, and the improvement of the bending resistance decreases the breaking properties (strength, elongation)).

However, in the above-described foamed polyurethane elastomer, both the improvement of the breaking properties (strength, elongation) and the improvement of the bending resistance can be achieved.

In addition, in the production of the foamed polyurethane elastomer, the three component-type polyurethane resin composition can be also used. In this method, the foamable mixture is prepared by individually preparing the first liquid, the second liquid, and the third liquid described above, and by mixing them.

In the three component-type polyurethane resin composition, the first liquid contains the isocyanate group-terminated prepolymer.

Further, the second liquid contains a portion of the polyol for foam molding and water (further, if necessary, the catalyst).

Further, the third liquid contains a remaining portion of the polyol for foam molding and the catalyst (preferably, the metal catalyst).

When the metal catalyst is used as a catalyst, in a case where the metal catalyst and the isocyanate group-terminated prepolymer coexist, the metal catalyst may react with the isocyanate group and the catalyst life may decrease. In addition, when the metal catalyst coexists with the water, the metal catalyst may be hydrolyzed, and the catalyst life may decrease.

Therefore, when the metal catalyst is used as a catalyst, preferably, the metal catalyst is prepared as a different liquid (that is, the third liquid) from the isocyanate group-terminated prepolymer and the water. Thus, it is possible to suppress a decrease in the catalyst life.

Further, the catalyst excluding the metal catalyst (for example, the nitrogen-containing organic catalyst) may be contained in any of the second liquid and the third liquid. Preferably, the catalyst excluding the metal catalyst (for example, the nitrogen-containing organic catalyst) is contained in the second liquid.

Further, if necessary, a foam stabilizer, a stabilizer, may be added to each of the first liquid, the second liquid, and the third liquid. An addition amount of the foam stabilizer and the stabilizer is appropriately set in accordance with its purpose and application.

Even in such a three component-type foamable polyurethane resin composition, as described above, it is possible to obtain the foamed polyurethane elastomer having excellent breaking properties (strength, elongation) and bending resistance.

Next, the foamed polyurethane elastomer of the present invention is described.

The foamed polyurethane elastomer is a foam of the above-described foamable polyurethane resin composition. The foamed polyurethane elastomer includes a foamed cured product of the above-described foamable polyurethane resin composition, and preferably consists of the foamed cured product of the foamable polyurethane resin composition.

The foamed polyurethane elastomer has a structure in which bubbles are dispersed in a polyurethane resin which is a reaction product of the foamable polyurethane resin composition. The bubble structure of the foamed polyurethane elastomer is a closed cell structure in which bubbles are closed (not open), or a semi-closed cell structure in which bubbles are partially open.

The foamed polyurethane elastomer is distinguished from polyurethane foams (flexible polyurethane foam, semi-rigid polyurethane foam, rigid polyurethane foam) by apparent density (JIS K 7222 (2005)).

More specifically, the apparent density of the foamed polyurethane elastomer is higher than the density of the polyurethane foam (for example, below 0.100 g/cm³), and for example, 0.100 g/cm³ or more, preferably 0.150 g/cm³ or more, more preferably 0.200 g/cm³ or more, further more preferably 0.220 g/cm³ or more, even more preferably 0.230 g/cm³ or more, particularly preferably 0.240 g/cm³ or more, and for example, 0.800 g/cm³ or less, preferably 0.600 g/cm³ or less, more preferably 0.400 g/cm³ or less, further more preferably 0.300 g/cm³ or less, even more preferably 0.280 g/cm³ or less, particularly preferably 0.260 g/cm³ or less.

Then, since such a foamed polyurethane elastomer is the foamed cured product of the above-described foamable polyurethane resin composition, it has excellent breaking properties (strength, elongation) and bending resistance.

The breaking strength of the foamed polyurethane elastomer is, for example, 1.20 MPa or more, preferably 1.30 MPa or more, more preferably 1.35 MPa or more, further more preferably 1.40 MPa or more, particularly preferably 1.45 MPa or more, and for example, 2.00 MPa or less, preferably 1.80 MPa or less, more preferably 1.60 MPa or less.

Further, the breaking elongation of the foamed polyurethane elastomer is, for example, 250% or more, preferably 270% or more, more preferably 300% or more, further more preferably 330% or more, particularly preferably 350% or more, and usually 600% or less.

The breaking strength and the breaking elongation can be measured in conformity with JIS K 6400-5 (2012) (hereinafter, the same).

In addition, as the bending resistance of the foamed polyurethane elastomer, a bending number in a DeMattia bending resistance test in conformity with JIS K 6260 (2010) is, for example, 50,000 times or more, preferably 60,000 times or more, more preferably 70,000 times or more, further more preferably 80,000 times or more, even more preferably 90,000 times or more, particularly preferably 100,000 times or more.

Further, the foamed polyurethane elastomer has excellent hardness.

More specifically, the hardness (C hardness) of the foamed polyurethane elastomer is, for example, 30 points or more, preferably 40 points or more, and for example, 60 points or less, preferably 55 points or less.

The hardness (C hardness) can be measured in conformity with JIS K 7312 (1996) (hereinafter, the same).

Further, the foamed polyurethane elastomer has excellent discoloration resistance.

More specifically, a color difference Δb (in conformity with Examples to be described later) before and after heating of the foamed polyurethane elastomer is, for example, 8 or less, preferably 7 or less, more preferably 6 or less, further more preferably 5 or less, even more preferably 4 or less, particularly preferably 3 or less, and usually 0.1 or more.

Then, such a foamed polyurethane elastomer is, for example, used as a material for industrial products selected from the group consisting of sole members of shoes such as inner soles, outer soles, and midsoles (portion between the inner sole and the outer sole) of shoes; shock absorbers such as shock absorbers of shoes, shock absorbers of automobiles, shock absorbers of helmets, and shock absorbers of grip tapes; interior materials of automobiles; sports goods such as shoes, helmets, grip tapes, bats (batting repulsion material), and cushion materials of soccer balls; members of headphones; packing members of civil engineering building materials; buffer materials such as packaging materials, pillows, mattresses, seat cushions, ceiling materials, and sound barrier flooring materials; clothing items such as brassieres, brassiere pads, brassiere cups, and shoulder pads; motorcycles and mobility members; buffer materials for robots; and buffer materials of nursing care articles, and electric and electronic products. The foamed polyurethane elastomer is preferably used as a material for industrial products selected from the group consisting of midsoles of shoes, shock absorbers, interior materials of automobiles, and sports goods.

In particular, the above-described foamed polyurethane elastomer is preferably used as a material for midsoles.

### Examples

Next, the present invention is described based on Examples and Comparative Examples. The present invention is however not limited by the following Examples. All designations of "part" or "parts" and "%" mean part or parts by mass and % by mass, respectively, unless otherwise particularly specified in the following description. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### <Material>

### A. Material for First Liquid (Isocyanate Group-Terminated Prepolymer)

### A-1. Polyisocyanate Material

### (1) 1,4-H₆XDI

1,4-bis(isocyanatomethyl)cyclohexane, synthesized in accordance with Production Example 3 of International Patent Publication No. 2009/51114, purity (by gas chromatography measurement) of 99.9%, trans/cis ratio (in terms of mole)=86/14

### (2) 1,3-H₆XDI

1,3-bis(isocyanatomethyl)cyclohexane, trade name: TAKENATE 600, manufactured by Mitsui Chemicals, Inc.

### (3) MDI

diphenylmethane diisocyanate; trade name: COSMONATE PH, manufactured by KUMHO MITSUI CHEMICALS

### A-2. Polyol for Prepolymer

### (1) PTG-1000

crystalline polytetramethylene ether glycol, trade name: PTG-1000, number average molecular weight: 1000, average hydroxyl value: 112.1 mgKOH/g, manufactured by Hodogaya Chemical Co., Ltd.

### (2) PTG-2000

crystalline polytetramethylene ether glycol, trade name: PTG-2000, number average molecular weight: 2000, average hydroxyl value: 56.1 mgKOH/g, manufactured by Hodogaya Chemical Co., Ltd.

### (3) PTG-3000

crystalline polytetramethylene ether glycol, trade name: PTG-3000SN, number average molecular weight: 3000, average hydroxyl value: 37.4 mgKOH/g, manufactured by Hodogaya Chemical Co., Ltd.

### (4) PPG DL-4000

polyoxypropylene glycol, trade name: PPG DL-4000, number average molecular weight: 4000, average hydroxyl value: 28.1 mgKOH/g, manufactured by Mitsui Chemicals & SKC Polyurethanes Inc.

### B. Material for Second Liquid (Resin Premix)

### B-1. Polyol for Foam Molding (High Molecular Weight Polyol)

### (1) PTG-1000

crystalline polytetramethylene ether glycol, trade name: PTG-1000, number average molecular weight: 1000, average hydroxyl value: 112.1 mgKOH/g, manufactured by Hodogaya Chemical Co., Ltd.

### (2) PTG-1400

crystalline polytetramethylene ether glycol, trade name: PTMEG-1400, number average molecular weight: 1400, average hydroxyl value: 80.1 mgKOH/g, manufactured by Korea PTG Co., Ltd.

### (3) PTG-1500

crystalline polytetramethylene ether glycol, trade name: PTG-1500SN, number average molecular weight: 1500, average hydroxyl value: 74.8 mgKOH/g, manufactured by Hodogaya Chemical Co., Ltd.

### (4) ED-28

polyoxyethylene-terminated polyoxypropylene glycol, trade name: ED-28, number average molecular weight: 4000, average hydroxyl value: 28 mgKOH/g, manufactured by Mitsui Chemicals & SKC Polyurethanes Inc.

### (5) ED-56

polyoxyethylene-terminated polyoxypropylene glycol, trade name: ED-56, number average molecular weight: 2000, average hydroxyl value: 56 mgKOH/g, manufactured by Mitsui Chemicals & SKC Polyurethanes Inc.

### (6) EP-950

polyoxyethylene-terminated polyoxypropylene triol, trade name: EP-950, number average molecular weight: 5000, average hydroxyl value: 33.7 mgKOH/g, manufactured by Mitsui Chemicals & SKC Polyurethanes Inc.

### (7) PTG-L2000

noncrystalline polytetramethylene ether glycol, trade name: PTG-L-2000, number average molecular weight: 2000, average hydroxyl value: 56.1 mgKOH/g, manufactured by Hodogaya Chemical Co., Ltd.

### B-2. Polyol for Foam Molding (Low Molecular Weight Polyol)

### (1) 1,4-BD

1,4-butanediol, manufactured by Mitsubishi Chemical Corporation

### B-3. Cross-Linking Agent

### (2) DEOA

diethanolamine, manufactured by Tokyo Chemical Industry Co., Ltd.

### C. Foaming Agent

### (1) Water (Ion-Exchanged Water)

### D. Catalyst

### D-1. Nitrogen-Containing Organic Catalyst

### (1) DABCO TMR

aliphatic amine catalyst, 2-hydroxypropyltrimethylammonium octylate, manufactured by Evonik Industries AG

### (2) DABCO 33LV

aliphatic amine catalyst, triethylenediamine, manufactured by Evonik Industries AG

### (3) NIAX CATALYST A-1

aliphatic amine catalyst, 70% dipropylene glycol solution of bis(dimethylaminoethyl)ether, manufactured by Momentive Performance Materials

### (4) POLYCAT41

triazine catalyst, 1,3,5-tris[3-(dimethylamino)propyl]hexahydro-s-trizazine, manufactured by Evonik Industries AG

### D-2. Metal Catalyst

### (1) K-KAT XK-633

zinc-based metal catalyst, manufactured by King Industries, Inc.

### (2) BiCAT8108

bismuth-based metal catalyst, bismuth neodecanate (bismuth(III) neodecanoate), manufactured by The Shepherd Chemical Company

### E. Stabilizer

### (1) Irganox245

antioxidant, hindered phenol compound, trade name: Irganox245, manufactured by BASF Japan Ltd.

### (2) LA-72

light-resistant stabilizer, hindered amine compound, trade name: ADK STAB LA-72, manufactured by ADEKA CORPORATION

### <Examples and Comparative Examples>

### 1. Preparation of First Liquid

A four-necked flask equipped with a stirrer, a thermometer, a reflux tube, and a nitrogen introduction tube was charged with a polyisocyanate material and a polyol for prepolymer (a portion of the polyol material) at the number of parts by mass shown in each table (isocyanate index NCO/OH=3.71 to 5.08), and the charged mixture was stirred at 80°C for 1 hour under a nitrogen atmosphere.

Thereafter, 10 ppm (0.10 parts by mass with respect to 10000 parts by mass of the total amount of the material isocyanate and the material polyol) of tin octylate (trade name: STANOCT, manufactured by API CORPORATION) which was previously diluted to 4% by mass by diisononyl adipate (manufactured by J-PLUS Co., Ltd.) was added with respect to the total amount of the material isocyanate and the material polyol, and stirred and mixed under a temperature control of 80°C under a nitrogen stream.

Thus, a first liquid containing an isocyanate group-terminated prepolymer was prepared.

### 2. Preparation of Second Liquid

A polyol for foam molding (remaining portion of the polyol material), a foaming agent (ion-exchanged water), a foam stabilizer, a nitrogen-containing organic catalyst, and a stabilizer (light-resistant stabilizer, antioxidant) were uniformly stirred and mixed at the number of parts by mass shown in each table, and the obtained mixture was left to stand for 1 hour in an oven at 50°C.

Thus, a resin premix was prepared as a second liquid.

### 3. Foam Molding

The total amount of the obtained second liquid (resin premix), 100 parts by mass of the first liquid (isocyanate group-terminated prepolymer) whose temperature was controlled to 80°C, and the metal catalyst at the number of parts by mass (23°C) shown in each table were blended, and the obtained mixture was stirred for 10 seconds with a hand mixer (number of rotations of 5000 rpm), thereby preparing a foamable mixture.

Then, the obtained foamable mixture was quickly transferred to a mold (manufactured by SUS Corporation, 210×300×10 mm) whose temperature was previously controlled to 80°C in an oven immediately after the preparation, and a lid of the mold was closed to be fixed with a vise.

Thereafter, the mold was left to stand for 15 minutes in the oven at 80°C, and the foamable mixture was foamed in the mold.

Thereafter, the foamed polyurethane elastomer was taken out (demolded) from the mold, and cured overnight in an oven at 60°C.

Thus, the foamed polyurethane elastomer was obtained.

In Comparative Example 4, a prepolymer of diphenylmethane diisocyanate was used as an isocyanate group-terminated prepolymer. Further, both the first liquid and the second liquid were reacted by controlling the temperature to 40°C. Further, the temperature of the mold was controlled to 60°C.

### <Evaluation Method>

### (1) Density

A measurement sample was cut out from the foamed polyurethane elastomer, and the apparent density of the measurement sample was measured in conformity with JIS K 7222:2005. The results are shown in each table.

### (2) Asker C Hardness

The Asker C hardness of the foamed polyurethane elastomer was measured in conformity with JIS K 7312-7:1996. The results are shown in each table.

### (3) Tensile Test (Breaking Strength, Breaking Elongation)

A measurement sample was fabricated from the foamed polyurethane elastomer having a thickness of 10 mm using a JIS No. 1 dumbbell, and the breaking strength and the breaking elongation of the measurement sample were measured in conformity with JIS K 6400-5:2012. The results are shown in each table.

### (4) DeMattia Bending Resistance (Flex Cracking Resistance)

A measurement sample of 140 mm×25 mm×10 mm was cut out from the foamed polyurethane elastomer, and the bending resistance of the measurement sample was measured in conformity with JIS K 6260:2010. The results are shown in each table. Those which were not broken after 0.1 million times of bending test was denoted as >100 (×1000 times) or more.

### (5) Discoloration Resistance

The discoloration resistance of the foamed polyurethane elastomer was evaluated by the following method.

In other words, a measurement sample of 40 mm×40 mm×10 mm was cut out from each of the foamed polyurethane elastomers of Examples and Comparative Examples, and Δb was measured using a color difference meter (fully automatic color difference meter COLOR ACE MODEL TC-1, manufactured by Tokyo Denshoku CO., LTD.).

Thereafter, each measurement sample was subjected to a heating test at 80°C in an oven under the air for five days. After the test, Δb was measured again with a color difference meter. A difference between Δb after the heating test and Δb before the heating test was referred to as Δb for a discoloration resistance test. The results are shown in each table.

[Table 1]

**Table 1**

| No. | | | Ex. 1 | Ex. 2 | Ex. 3 | Ex. 4 | Comparative Ex. 1 |
|---|---|---|---|---|---|---|---|
| | Polyisocyanate Material | 1, 4-H6XDI | 26.59 | 25.77 | 29.58 | 32.00 | 23.66 |
| | | 1, 3-H6XDI | - | - | - | - | - |
| | | MDI | - | - | - | - | - |
| | Polyol for Prepolymer | PTG-1000 | 11.14 | 12.61 | 12.40 | 11.78 | - |
| | | PTG-2000 | - | - | - | - | - |
| | | PTG-3000 | 55.69 | 63.02 | 61.99 | 58.87 | - |
| | | PPG_DL-4000 | 28. 78 | - | - | - | 95.67 |
| | Total Amount of First Liquid | | 122.19 | 101.40 | 103.97 | 102.65 | 119.33 |
| | Polyol for Foam Molding | PTG-1000 | 4.40 | - | - | - | 4.33 |
| | | PTG-1400 | - | 7.31 | 7. 68 | 8.81 | - |
| | | PTG-1500 | - | - | - | - | - |
| | | PPG_ED-28 | - | 17.06 | 17.93 | 20.55 | - |
| | | PPG_ED-56 | - | - | - | - | - |
| | | PPG_EP-950 | - | - | - | - | - |
| parts by mass | | PTG-L 2000 | - | - | - | - | - |
| | | 1, 4-BD | 3.30 | 3. 90 | 5. 63 | 5.87 | 3. 25 |
| | Foaming Agent | Water | 1.32 | 0. 97 | 1.02 | 1.17 | 1.30 |
| | Cross-Linking Agent | DEOA | - | - | - | 0. 23 | - |
| | Nitrogen-Containing Organic Catalyst | 33LV | - | - | - | - | - |
| | | A-1 | - | - | - | - | - |
| | | DABCO TMR | 0.55 | - | - | - | 0.54 |
| | | polycat41 | - | - | 0. 20 | - | - |
| | Stabilizer | LA-72 | 0.55 | 0.49 | 0.51 | 0.59 | 0.54 |
| | | Irganox 245 | 0.11 | 0.10 | 0.10 | 0.12 | 0.11 |
| | Foam Stabilizer | | 0.78 | 1.46 | 2.05 | 1.76 | 0. 77 |
| | Total Amount of Second Liquid | | 11.01 | 31.29 | 35.14 | 39.10 | 10.85 |
| | Metal Catalyst | K-KAT XK-633 | 2. 20 | 1.95 | 2.05 | 2.35 | 2.17 |
| | | BiCAT8108 | 2. 20 | 1.95 | 2.05 | 2.35 | 2.17 |
| Isocyanate Index | | | 85 | 90 | 90 | 90 | 85 |
| Ratio of Mixing Liquid (mass ratio) | | Second Liquid/First Liquid | 0.09 | 0.31 | 0.34 | 0.38 | 0.09 |
| Crystalline PTG+Noncrystalline PTG+PPG/Polyol Material (mass ratio) | | | 0. 97 | 0. 96 | 0.95 | 0.94 | 0. 97 |
| Crystalline PTG/Crystal line PTG+Noncrystalline PTG+PPG (mass ratio) | | | 0.71 | 0.83 | 0.82 | 0. 79 | 0.04 |
| Water/Total Amount (mass ratio) | | | 0.0096 | 0.0071 | 0.0072 | 0.0080 | 0.0097 |
| Evaluation | Density (g/cm3) | | 0.244 | 0. 252 | 0. 251 | 0. 251 | 0.244 |
| | C Hardness | | 45 | 52 | 54 | 54 | 38 |
| | Breaking Strength (MPa) | | 1.3 | 1.51 | 1.47 | 1.30 | 0.94 |
| | Breaking Elongation (%) | | 360 | 360 | 360 | 290 | 370 |
| | DeMattia Bending Resistance×1000 times | | >100 | 90 | >100 | >100 | >100 |
| | Yellowing Δb | | 3.3 | 2.3 | 5.1 | 5. 9 | 5.3 |

[Table 2]

**Table 2**

| No. | | | Comparative Ex. 2 | Ex. 5 | Ex. 6 | Ex. 7 | Comparatve Ex. 3 |
|---|---|---|---|---|---|---|---|
| | Polyisocyanate Material | 1,4-H6XDI | 25.74 | 26.15 | 27. 01 | 27. 42 | 27. 85 |
| | | 1,3-H6XDI | - | - | - | - | - |
| | | MDI | - | - | - | - | - |
| | Polyol for Prepolymer | PTG-1000 | 7.90 | 9.47 | 12.74 | 14.32 | 15.94 |
| | | PTG-2000 | - | - | - | - | - |
| | | PTG-3000 | 39.48 | 47.34 | 63. 67 | 71.56 | 79.66 |
| | | PPG_DL-4000 | 48.25 | 38.80 | 19. 19 | 9. 72 | - |
| | Total Amount of First Liquid | | 121.37 | 121.75 | 122.61 | 123. 02 | 123.45 |
| | Polyol for Foam Molding | PTG-1000 | 4.37 | 4.39 | 4.40 | 4.40 | 4.40 |
| | | PTG-1400 | - | - | - | - | - |
| | | PTG-1500 | - | - | - | - | - |
| | | PPG_ED-28 | - | - | - | - | - |
| | | PPG_ED-56 | - | - | - | - | - |
| | | PPG_EP-950 | - | - | - | - | - |
| parts by mass | | PTG-L 2000 | - | - | - | - | - |
| | | 1, 4-BD | 3.28 | 3.29 | 3.30 | 3.30 | 3.30 |
| | Foaming Agent | Water | 1.31 | 1.32 | 1.32 | 1.32 | 1.32 |
| | Cross-Linking Agent | DEOA | - | - | - | - | - |
| | Nitrogen-Containing Organic Catalyst | 33LV | - | - | - | - | - |
| | | A-1 | - | - | - | - | - |
| | | DABCO TMR | 0.55 | 0.55 | 0.55 | 0.55 | 0.55 |
| | | polycat41 | - | - | - | - | - |
| | Stabilizer | LA-72 | 0.55 | 0.55 | 0.55 | 0.55 | 0.55 |
| | | Irganox 245 | 0.11 | 0.11 | 0.11 | 0.11 | 0.11 |
| | Foam Stabilizer | | 0.78 | 0.78 | 0. 79 | 0. 79 | 0. 79 |
| | Total Amount of Second Liquid | | 10.94 | 11.00 | 11.01 | 11.02 | 11.02 |
| | Metal Catalyst | K-KAT XK-633 | 2.18 | 2.20 | 2.20 | 2.20 | 2.20 |
| | | BiCAT8108 | 2.18 | 2.20 | 2.20 | 2.20 | 2.20 |
| Isocyanate Index | | | 85 | 85 | 85 | 85 | 85 |
| Ratio of Mixing Liquid (mass ratio) | | Second Liquid/First Liquid | 0.09 | 0.09 | 0.09 | 0.09 | 0.09 |
| Crystalline PTG+Noncrystalline PTG+PPG/Polyol Material (mass ratio) | | | 0.97 | 0.97 | 0.97 | 0.97 | 0.97 |
| Crystalline PTG/Crystalline PTG+Noncrystalline PTG+PPG (mass ratio) | | | 0.52 | 0.61 | 0.81 | 0.90 | 1.00 |
| Water/Total Amount (mass ratio) | | | 0.0096 | 0.0096 | 0.0096 | 0.0095 | 0.0095 |
| Evaluation | Density (g/cm3) | | 0.246 | 0.248 | 0.247 | 0.253 | 0.247 |
| | C Hardness | | 44 | 42 | 49 | 50 | 52 |
| | Breaking Strength (MPa) | | 0.89 | 1.09 | 1.23 | 1.48 | 1.64 |
| | Breaking Elongation (%) | | 260 | 350 | 300 | 350 | 370 |
| | DeMattia Bending Resistance×1000 times | | >100 | >100 | 81 | 68 | 13 |
| | Yellowing Δb | | 4.9 | 4.4 | 3.5 | 3.1 | 3.0 |

[Table 3]

**Table 3**

| No. | | | Comparative Ex. 4 | Comparative Ex. 5 | Ex. 8 | Ex. 9 | Ex. 10 |
|---|---|---|---|---|---|---|---|
| | Polyisocyanate Material | 1, 4-H6XDI | - | 25. 64 | 25.77 | 25.28 | 29. 75 |
| | | 1, 3-H6XDI | - | - | - | 0.49 | - |
| | | MDI | 32. 65 | - | - | - | - |
| | Polyol for Prepolymer | PTG-1000 | - | 12.54 | 12.61 | 12.61 | 12.45 |
| | | PTG-2000 | 29. 64 | - | - | - | - |
| | | PTG-3000 | - | 62.69 | 63.03 | 63.02 | 62.23 |
| | | PPG_DL-4000 | - | - | - | - | - |
| | Total Amount of First Liquid | | 62.30 | 100.86 | 101.41 | 101.40 | 104.42 |
| | Polyol for Foam Molding | PTG-1000 | - | - | - | - | - |
| | | PTG-1400 | - | 3.72 | 7.31 | 7. 31 | - |
| | | PTG-1500 | 57. 10 | - | - | - | - |
| | | PPG_ED-28 | - | 8.67 | 16.08 | 17.06 | - |
| | | PPG_ED-56 | 13. 25 | - | - | - | - |
| | | PPG_EP-950 | - | 12.39 | 0. 97 | - | - |
| parts by mass | | PTG-L 2000 | - | - | - | - | 25. 33 |
| | | 1, 4-BD | | 3.96 | 3.90 | 3.90 | 5.57 |
| | Foaming Agent | Water | 1.23 | 0.99 | 0.97 | 0.97 | 1.01 |
| | Cross-Linking Agent | DEOA | - | - | - | - | - |
| | Nitrogen-Containing Organic Catalyst | 33LV | 0.82 | - | - | - | - |
| | | A-1 | 0. 14 | - | - | - | - |
| | | DABCO TMR | - | - | - | - | - |
| | | polycat41 | - | - | - | - | 0.20 |
| | Stabilizer | LA-72 | - | 0.50 | 0.49 | 0.49 | 0.51 |
| | | Irganox 245 | 0.68 | 0.10 | 0.10 | 0.10 | 0. 10 |
| | Foam Stabilizer | | 1.23 | 1.49 | 1.46 | 1.46 | 2.03 |
| | Total Amount of Second Liquid | | 74. 45 | 31.81 | 31.28 | 31.29 | 34. 75 |
| | Metal Catalyst | K-KAT XK-633 | - | 1. 98 | 1. 95 | 1. 95 | 2.03 |
| | | BiCAT8108 | - | 1. 98 | 1. 95 | 1. 95 | 2.03 |
| Isocyanate Index | | | 95 | 90 | 90 | 90 | 90 |
| Ratio of Mixing Liquid (mass ratio) [Second Liquid/First Liquid | | | 1.20 | 0.32 | 0.31 | 0.31 | 0.33 |
| Crystalline PTG+Noncrystalline PTG+PPG/Polyol Material (mass ratio) | | | - | 0.84 | 0.95 | 0.96 | 0.95 |
| Crystalline PTG/Crystalline PTG+Noncrystalline PTG+PPG (mass ratio) | | | 0.87 | 0.90 | 0.84 | 0.83 | 0.75 |
| Water/Total Amount (mass ratio) | | | 0.0090 | 0.0073 | 0.0071 | 0.0071 | 0.0071 |
| Evaluation | Density (g/cm3) | | 0.247 | 0.242 | 0.25 | 0.25 | 0.25 |
| | C Hardness | | 43 | 46 | 52 | 52 | 58 |
| | Breaking Strength (MPa) | | 0.9 | 1.16 | 1.32 | 1.35 | 1.45 |
| | Breaking Elongation (%) | | 290 | 270 | 330 | 330 | 300 |
| | DeMattia Bending Resistance×1000 times | | >100 | 14 | 68 | >100 | >100 |
| | **Yellowing** Δb | | 15.8 | 5.2 | 2.9 | 2.8 | 3.8 |

While the illustrative embodiments of the present invention are provided in the above description, such is for illustrative purpose only and it is not to be construed as limiting the scope of the present invention.

### INDUSTRIAL APPLICATION

The foamable polyurethane resin composition and the foamed polyurethane elastomer of the present invention are preferably used as sole members of shoes, shock absorbers, interior materials of automobiles, sports goods, buffer materials, clothing items, mobility members, and buffer materials for robots.

## Claims

1. A foamable polyurethane resin composition comprising:
a polyisocyanate material, a polyol material, water, and a catalyst, wherein
the polyisocyanate material contains 1,4-bis(isocyanatomethyl)cyclohexane;
the polyol material contains
crystalline polytetramethylene ether glycol and
noncrystalline polytetramethylene ether glycol and/or polyoxypropylene glycol;
the total amount of the crystalline polytetramethylene ether glycol, the noncrystalline polytetramethylene ether glycol, and the polyoxypropylene glycol is 90% by mass or more with respect to the total amount of the polyol material; and
a ratio of the crystalline polytetramethylene ether glycol is 60% by mass or more and 90% by mass or less with respect to the total amount of the crystalline polytetramethylene ether glycol, the noncrystalline polytetramethylene ether glycol, and the polyoxypropylene glycol.

2. The foamable polyurethane resin composition according to claim 1, wherein
the foamable polyurethane resin composition includes
a first liquid containing an isocyanate group-terminated prepolymer which is a reaction product of the polyisocyanate material and a portion of the polyol material, and
a second liquid containing a remaining portion of the portion of the polyol material, the water, and the catalyst.

3. The foamable polyurethane resin composition according to claim 1, wherein
the catalyst includes 1,3,5-tris[3-(dimethylamino)propyl]hexahydro-s-triazine.

4. A foamed polyurethane elastomer comprising:
a foamed cured product of the foamable polyurethane resin composition according to claim 1.

## Patentansprüche

1. Schäumbare Polyurethanharzzusammensetzung, umfassend:
ein Polyisocyanatmaterial, ein Polyolmaterial, Wasser und einen Katalysator, worin
das Polyisocyanatmaterial **1,4-**Bis(isocyanatomethyl)cyclohexan enthält;
das Polyolmaterial
kristallines Polytetramethylenetherglykol und
nichtkristallines Polytetramethylenetherglykol und/oder Polyoxypropylenglykol
enthält;
die Gesamtmenge des kristallinen Polytetramethylenetherglykols, des nichtkristallinen Polytetramethylenetherglykols und des Polyoxypropylenglykols 90 Massen-% oder mehr, bezogen auf die Gesamtmenge des Polyolmaterials, beträgt; und
ein Anteil des kristallinen Polytetramethylenetherglykols 60 Massen-% oder mehr und 90 Massen-% oder weniger, bezogen auf die Gesamtmenge des kristallinen Polytetramethylenetherglykols, des nichtkristallinen Polytetramethylenetherglykols und des Polyoxypropylenglykols, beträgt.

2. Schäumbare Polyurethanharzzusammensetzung gemäß Anspruch **1,** worin
die schäumbare Polyurethanharzzusammensetzung enthält
eine erste Flüssigkeit, die ein Isocyanatgruppenterminiertes Prepolymer enthält, das ein Reaktionsprodukt des Polyisocyanatmaterials und eines Teils des Polyolmaterials ist, und
eine zweite Flüssigkeit, die einen Restteil des Teils des Polyolmaterials, das Wasser und den Katalysator enthält.

3. Schäumbare Polyurethanharzzusammensetzung gemäß Anspruch 1, worin
der Katalysator 1,3,5-Tris[3-(dimethylamino)propyl]hexahydro-s-triazin enthält.

4. Geschäumtes Polyurethanelastomer, umfassend:
ein geschäumtes, gehärtetes Produkt der schäumbaren Polyurethanharzzusammensetzung gemäß Anspruch 1.

## Revendications

1. Composition de résine de polyuréthane expansible comprenant :
un matériau polyisocyanate, un matériau polyol, de l'eau et un catalyseur, dans laquelle
le matériau polyisocyanate contient du 1,4-bis(isocyanatométhyl)cyclohexane ;
le matériau polyol contient
du polytétraméthylène éther glycol cristallin et
du polytétraméthylène éther glycol non cristallin et/ou polyoxypropylène glycol ;
la quantité totale du polytétraméthylène éther glycol cristallin, du polytétraméthylène éther glycol non cristallin, et le polyoxypropylène glycol est de 90 % en masse ou plus par rapport à la quantité totale du matériau polyol ; et
un rapport du polytétraméthylène éther glycol cristallin est de 60 % en masse ou plus et de 90 % en masse ou moins par rapport à la quantité totale du polytétraméthylène éther glycol cristallin, du polytétraméthylène éther glycol non cristallin, et du polyoxypropylène glycol.

2. Composition de résine de polyuréthane expansible selon la revendication 1, dans laquelle
la composition de résine de polyuréthane expansible inclut
un premier liquide contenant un prépolymère terminé par un groupe isocyanate qui est un produit de réaction du matériau polyisocyanate et une partie du matériau polyol, et
un deuxième liquide contenant une partie restante de la partie du matériau polyol, l'eau et le catalyseur.

3. Composition de résine de polyuréthane expansible selon la revendication 1, dans laquelle
le catalyseur inclut 1,3,5-tris[3-(diméthylamino)propyl]hexahydro-s-triazine.

4. Élastomère de polyuréthane expansible comprenant :
un produit expansé durci de la composition de résine de polyuréthane expansible selon la revendication 1.
